# EUROPEAN PATENT APPLICATION

(11) **EP 4 471 696 A1**
(43) Date of publication of application: **04.12.2024**
(21) Application number: 23746490.4
(22) Date of filing: 30.01.2023
(51) Int. Cl.: G06Q 20/06, G06Q 20/32, H04W 4/80, H04W 52/02, H04W 76/14, H02J 9/06, H02J 50/20

(54) **DIGITAL CURRENCY PAYMENT METHOD AND DEVICE**

(30) Priority: 30.01.2022 CN 202210114105
(71) Applicant: Digital Currency Institute, The People's Bank of China, Beijing 100071 (CN)
(72) Inventor: MU, Changchun, Beijing 100071 (CN); DI, Gang, Beijing 100071 (CN); ZHAO, Xinyu, Beijing 100071 (CN); YU, Peng, Beijing 100071 (CN); CUI, Peidong, Beijing 100071 (CN)
(74) Representative: Piticco, Lorena
(86) International application number: PCT/CN2023/073861
(87) International publication number: WO 2023/143613

(57) **Abstract**

The present application relates to the technical field of digital currency, and discloses a digital currency payment method and device. One specific embodiment of the method comprises: establishing a communicative connection with a collection device by means of a near-field communication mode; in the case that the communicative connection is established, enabling a payment chip to enter a payment state, and obtaining battery power of the device; and in the case that the battery power is not sufficient to support digital currency payment, supplying power to the payment chip by means of power generated by a near-field communication alternating magnetic field of the collection device at an antenna coil of the payment chip, so as to perform digital current payment.

## Description

### CROSS REFERENCE OF RELATED APPLICATION

This application claims priority to Chinese Patent Application No. 202210114105.4 titled "DIGITAL CURRENCY PAYMENT METHOD AND DEVICE", filed on January 30, 2022, which is incorporated herein by reference in its entirety as part or all of this application.

### TECHNICAL FIELD

The present disclosure relates to a technical field of digital currency, and in particular, to a method and a device for payment of digital currency.

### BACKGROUND

With the increasing widespread adoption of digital currency, there are more and more application scenarios for digital currency. As a convenient payment method, the digital currency is paid via a digital currency wallet application installed on the mobile terminal. At present, both a Secure Element SE and a communication unit NFC chip of the mobile terminal are powered by a battery of the mobile smart terminal.

When the battery of the mobile terminal is completely exhausted, the payment of digital currency based on Secure Element SE becomes impracticable. Therefore, how to implement the payment of digital currency based on Secure Element SE under exhaustion of the battery of the mobile terminal is expected.

### SUMMARY

In view of the above, a method and a device for payment of digital currency are provided in embodiments of the present disclosure.

According to an aspect of the embodiments of the present disclosure, a method for payment of digital currency is provided.

A method for payment of digital currency includes: establishing a communication connection with a payee device through near field communication; acquiring a battery power of a device, when a payment chip enters a payment state based on the established communication connection; and powering the payment chip for the payment of digital currency by electricity generated in an antenna coil of the payment chip through a near field communication alternating magnetic field of the payee device, when the battery power is insufficient to support the payment of digital currency.

According to one or more embodiments of the present disclosure, the antenna coil of the payment chip has a power supply controller, and a power supply mode for the payment chip is switched by controlling a switching state of the power supply controller.

According to one or more embodiments of the present disclosure, the powering the payment chip by electricity generated in the antenna coil of the payment chip through the near field communication alternating magnetic field of the payee device, when the battery power is insufficient to support the payment of digital currency, includes:
switching on the power supply controller to power the payment chip by electricity generated in the antenna coil of the payment chip through the near field communication alternating magnetic field of the payee device, when the battery power is insufficient to support the payment of digital currency; and
wherein the method further comprises: switching off the power supply controller such that the battery power is supplied to the payment chip for the payment of digital currency, when the battery power is sufficient to support the payment of digital currency.

According to one or more embodiments of the present disclosure, the payment chip includes a secure element and a near field communication unit, the secure element is configured to perform safe payment, and the near field communication unit is configured to establish the communication connection with the payee device.

According to another aspect of the embodiments of the present disclosure, a device for payment of digital currency is provided.

A device for payment of digital currency includes: a connection establishment module configured to establish a communication connection with a payee device through near field communication; a power acquisition module configured to acquire a battery power of a device, when a payment chip enters a payment state based on the established communication connection; and a power supply and payment module configured to power the payment chip for the payment of digital currency by electricity generated in an antenna coil of the payment chip through a near field communication alternating magnetic field of the payee device, when the battery power is insufficient to support the payment of digital currency.

According to one or more embodiments of the present disclosure, the antenna coil of the payment chip has a power supply controller, and a power supply mode for the payment chip is switched by controlling a switching state of the power supply controller.

According to one or more embodiments of the present disclosure, the power supply and payment module is further configured to switch on the power supply controller to power the payment chip by electricity generated in the antenna coil of the payment chip through the near field communication alternating magnetic field of the payee device, when the battery power is insufficient to support the payment of digital currency; and wherein the power supply and payment module is further configured to: switch off the power supply controller such that the battery power is supplied to the payment chip for the payment of digital currency, when the battery power is sufficient to support the payment of digital currency.

According to one or more embodiments of the present disclosure, the payment chip includes a secure element and a near field communication unit, the secure element is configured to perform safe payment, and the near field communication unit is configured to establish the communication connection with the payee device.

According to another aspect of the embodiments of the present disclosure, an electronic device for payment of digital currency is provided.

The electronic device for payment of digital currency includes: one or more processors, and a storage device configured to store one or more programs. The one or more programs, when executed by the one or more processors, cause the one or more processors to implement the method for payment of digital currency provided by any of the embodiments of the present disclosure.

According to yet another aspect of the embodiments of the present disclosure, a computer-readable medium is provided.

The computer-readable medium has a computer program stored thereon. The program, when executed by a processor, performs the method for payment of digital currency provided by any of the embodiments of the present disclosure.

Further effects of the above-mentioned non-conventional alternations are described below in conjunction with specific implementations

### BRIEF DESCRIPTION OF THE DRAWINGS

The accompanying drawings are provided for a better understanding of the present disclosure and do not constitute an improper limitation of the present disclosure. In the drawings:
FIG. 1 is a schematic diagram of main steps of a method for payment of digital currency according to an embodiment of the present disclosure;
FIG. 2 is a flow chart of a method for payment of digital currency according to an embodiment of the present disclosure;
FIG. 3 is a schematic diagram of steps for payment of digital currency according to an embodiment of the present disclosure;
FIG. 4 is a schematic diagram of a process of payment of digital currency according to an embodiment of the present disclosure;
FIG. 5 is a schematic diagram of main modules of a device for payment of digital currency according to an embodiment of the present disclosure;
FIG. 6 is an exemplary system architecture diagram in which an embodiment of the present disclosure may be applied; and
FIG. 7 is a schematic structural diagram of a computer system of a terminal device or server suitable for implementing an embodiment of the present disclosure.

### DETAILED DESCRIPTION OF THE EMBODIMENTS

Exemplary embodiments of the present disclosure are described below in connection with the accompanying drawings. In the following description, various details of the embodiments of the present disclosure are included to aid in understanding, and they should be considered as being merely exemplary. Therefore, those of ordinary skill in the art should understand that various changes and modifications can be made to the embodiments described herein without departing from the scope and spirit of the present disclosure. Description of well-known functions and constructions is omitted from the following description, for clarity and conciseness.

In order to solve the technical problem in the conventional technology, the present disclosure provides a method and a device for payment of digital currency, with which a mobile terminal may be powered using electricity generated in an antenna coil of the payment chip through a near field communication alternating magnetic field of a payee device, when a battery power of the mobile terminal is insufficient to support the payment of digital currency, so that the payment of digital currency may be completed.

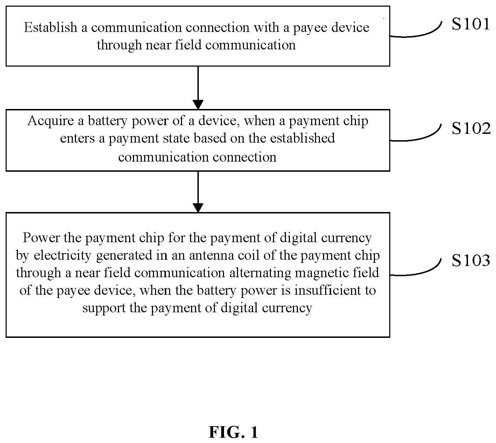

FIG. 1 is a schematic diagram of main steps of a method for payment of digital currency according to an embodiment of the present disclosure. As shown in FIG. 1, the method for payment of digital currency according to the embodiment of the present disclosure mainly includes step S101 to step S103 as follows.

In step S101, a communication connection with a payee device is established through near field communication.

In step S102, a battery power of a device is acquired, when a payment chip enters a payment state based on the established communication connection.

In step S103, the payment chip is powered for the payment of digital currency by electricity generated in an antenna coil of the payment chip through a near field communication alternating magnetic field of the payee device, when the battery power is insufficient to support the payment of digital currency.

According to an embodiment of the present disclosure, the antenna coil of the payment chip has a power supply controller, and a power supply mode for the payment chip is switched by controlling a switching state of the power supply controller.

According to an embodiment of the present disclosure, the powering the payment chip by electricity generated in the antenna coil of the payment chip through the near field communication alternating magnetic field of the payee device, the battery power is insufficient to support the payment of digital currency, includes: switching on the power supply controller to power the payment chip by electricity generated in the antenna coil of the payment chip through the near field communication alternating magnetic field of the payee device, when the battery power is insufficient to support the payment of digital currency.

The method for payment of digital currency may further include: switching off the power supply controller such that the battery power is supplied to the payment chip for the payment of digital currency, when the battery power is sufficient to support the payment of digital currency.

According to an embodiment of the present disclosure, the payment chip includes a secure element and a near field communication element, the secure element is configured to perform safe payment, and the near field communication unit is configured to establish the communication connection with the payee device.

With the method for payment of digital currency according to the embodiment of the present disclosure, the payment of digital currency can be completed by supplying the power using electricity generated in the antenna coil of the payment chip through the near field communication alternating magnetic field of the payee device, when the battery power of the mobile terminal is insufficient to support the payment of digital currency. In addition, the power supply controller is installed on the payment chip to control the power supply mode for the payment chip, so that switching of the power supply mode is more flexible and convenient. When the battery power of the device is sufficient to support the payment of digital currency, the device is powered by the battery. When the battery power is insufficient to support the payment of digital currency, the power is supplied using electricity generated in the antenna coil of the payment chip through the near field communication alternating magnetic field of the payee device. In this way, completion of the payment is ensured and strong support for expansion of application scenarios of the digital currency is provided.

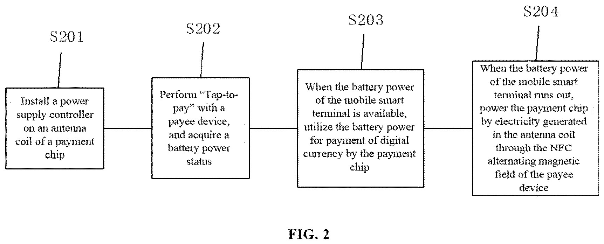

FIG. 2 is a flow chart of a method for payment of digital currency according to an embodiment of the present disclosure. A specific implementation of a method for payment of digital currency according to an embodiment of the present disclosure is described in conjunction with FIG. 2. The method includes step S201 to step S204.

In step S201, a power supply controller is installed on an antenna coil of a payment chip. The payment chip includes, for example, a near field communication (NFC) chip and a secure element (SE) chip. The NFC chip and the SE chip may be packaged together as a combined chip. The antenna coil may be an antenna coil of the NFC chip, or may be an antenna coil of the combined chip. Generally, the antenna coil belongs to the payment chip. NFC refers to Near Field Communication. Devices using the NFC technology (such as mobile phones) can exchange data when they are close to each other. This technology is evolved from an integration of non-contact radio frequency identification (RFID) and interconnection technology. Functions of an inductive card reader, an inductive card, and point-to-point communication are integrated on a single chip, so that mobile payment, electronic ticketing, access control, mobile identity recognition, anti-counterfeiting and other applications are realized by the mobile terminal. SE refers to a Secure Element.

In step S202, whenever a mobile smart terminal carrying the payment chip is in a card simulation state for payment, "Tap-to-pay" is performed on the mobile smart terminal with a payee device, and the NFC chip system actively acquires a battery power status. "Tap-to-pay" is a new payment method by UnionPay, in which based on an NFC module of the mobile smart terminal such as a smart phone and a smart bracelet or watch, and the tag payment technology by UnionPay, it is possible to enable the mobile smart terminal to be unlocked and pay with just one tap. The card simulation mode is actually equivalent to an IC card using RFID technology, which may replace a large number of IC cards (including credit cards) in occasions, shopping malls, bus cards, access control, tickets, and the like. A significant advantage is that the card can be powered by an RF domain of a non-contact card reader, even if the host device is not powered on.

In step S203, if the battery power of the mobile smart terminal is available, the battery power is utilized for payment of digital currency by the payment chip (including the Secure Element SE and NFC chip) carried on the mobile smart terminal, and the power supply controller of the antenna coil of the payment chip is switched off if it is a switched-on state.

In step S204, if the battery power of the mobile smart terminal runs out, the power supply controller of the antenna coil of the payment chip is switched on, to power the payment chip (including the NFC chip and the Secure Element SE) by electricity generated in the antenna coil through an NFC alternating magnetic field with a sine wave of 13.56 MHz reference frequency of the payee device, so as to realize power supply for the payment of digital currency. A specific frequency of the NFC alternating magnetic field may not be limited to the 13.56 MHz reference frequency, but may be another frequency which is set based on a specific scenario.

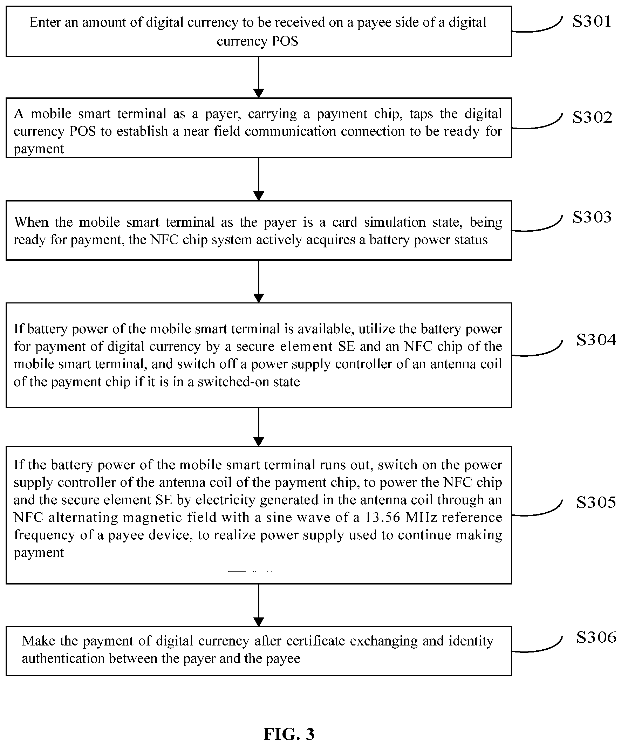

FIG. 3 is a schematic diagram of steps for payment of digital currency according to an embodiment of the present disclosure. As shown in FIG. 3, the payment of digital currency according to an embodiment of the present disclosure includes step S301 to step S306.

In step S301, an amount of digital currency to be received is entered on a payee side of a digital currency point of sale (POS).

In step S302, a mobile smart terminal as a payer, carrying a payment chip, taps the digital currency POS to establish a near field communication connection to be ready for payment.

In step S303, when the mobile smart terminal as the payer is in a card simulation state, being ready for payment, the NFC chip system actively acquires a battery power status.

In step S304, if the battery power of the mobile smart terminal is available, the battery power is utilized for payment of digital currency by a Secure Element SE and an NFC chip of the mobile smart terminal, and a power supply controller of an antenna coil of the payment chip is switched off if it is in a switched-on state.

In step S305, if the battery power of the mobile smart terminal runs out, the power supply controller of the antenna coil of the payment chip is switched on, to power the NFC chip and the Secure Element SE by electricity generated in the antenna coil through an NFC alternating magnetic field with a sine wave of a 13.56 MHz reference frequency of the payee device, so as to realize the power supply used to continue making the payment.

In step S306, the payment of digital currency is made after the certificate exchange and identity authentication between the payer and the payee.

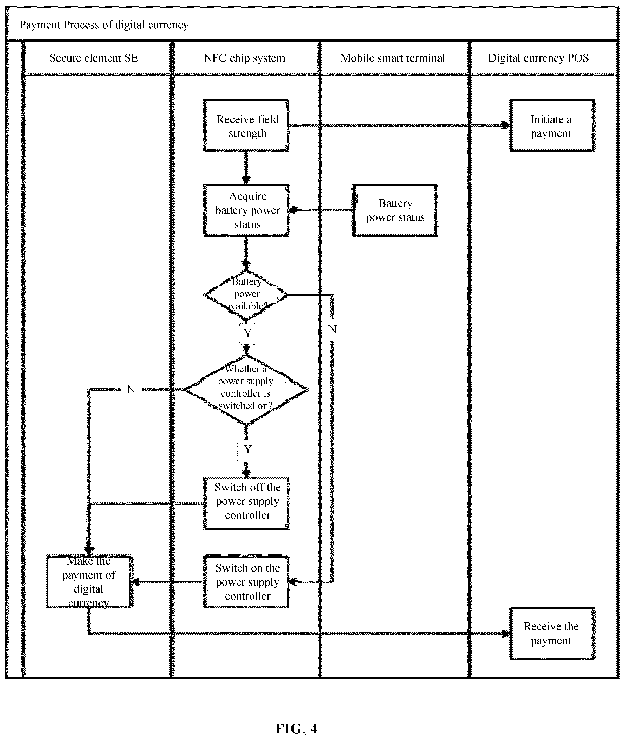

FIG. 4 is a schematic diagram of a process of payment of digital currency according to an embodiment of the present disclosure. As shown in FIG. 4, in this embodiment, a payment chip is divided into two parts, i.e., an NFC chip and a Secure Element SE, according to specific functional implementations, and the antenna coil of the payment chip is an antenna coil of the NFC chip. A process of the payment of digital currency according to an embodiment of the present disclosure mainly includes step S401 to step S407.

In step S401, a payee side on a digital currency POS initiates receiving of digital currency.

In step S402, an NFC chip system taps the digital currency POS to establish a near field communication connection and receives a field strength. The NFC chip system is a control system corresponding to the NFC chip located in a mobile smart terminal.

In step S403, the NFC chip system acquires a battery power status of the mobile smart terminal.

In step S404, if the battery power of the mobile smart terminal is available, it is determined whether the power supply controller of the antenna coil of the NFC chip is switched on. If the power supply controller is switched on, the power supply controller is switched off, and the process proceeds to step S406. Otherwise, the process proceeds to step S406.

In step S405, if the battery power of the mobile smart terminal runs out, the power supply controller of the antenna coil of the NFC chip is switched on, to power the NFC chip and the Secure Element SE by electricity generated in the antenna coil through an NFC alternating magnetic field with a sine wave of a 13.56 MHz reference frequency of a payee device, so as to realize the power supply used to continue making the payment.

In step S406, the payment of digital currency is made through the Secure Element SE after the certificate exchange and identity authentication between the payer and the payee.

In step S407, the digital currency POS completes receiving of digital currency.

In the method for payment of digital currency according to the embodiment of the present disclosure, the power is supplied using electricity generated in the antenna coil of the payment chip through the near field communication alternating magnetic field of the payee device, when a battery power of the mobile terminal is insufficient to support the payment of digital currency. In addition, the power supply controller is installed on the payment chip to control the power supply mode for the payment chip, so that switching of the power supply mode is more flexible and convenient. When the battery power of the device is sufficient to support the payment of digital currency, the device is powered by the battery. When the battery power is insufficient to support the payment of digital currency, the power is supplied using electricity generated in the antenna coil of the payment chip through the near field communication alternating magnetic field of the payee device. In this way, completion of the payment is ensured and strong support for expansion of application scenarios of the digital currency is provided.

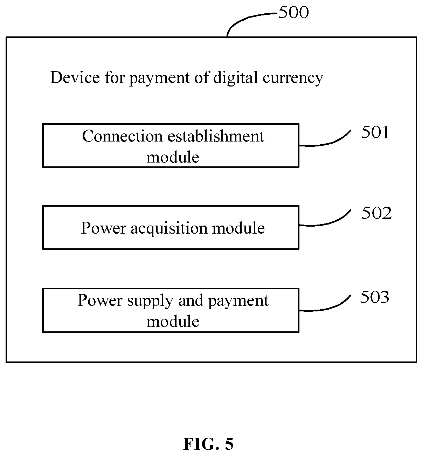

FIG. 5 is a schematic diagram of main modules of a device for payment of digital currency according to an embodiment of the present disclosure. As shown in FIG. 5, the device 500 for payment of digital currency according to the embodiment of the present disclosure mainly includes a connection establishment module 501, a power acquisition module 502 and a power supply and payment module 503.

The connection establishment module 501 is configured to establish a communication connection with a payee device through near field communication.

The power acquisition module 502 is configured to acquire a battery power of a device, when a payment chip enters a payment state based on the established communication connection.

The power supply and payment module 503 is configured to power the payment chip for the payment of digital currency using electricity generated in an antenna coil of the payment chip through a near field communication alternating magnetic field of the payee device, when the battery power is insufficient to support the payment of digital currency.

According to an embodiment of the present disclosure, the antenna coil of the payment chip has a power supply controller, and a power supply mode for the payment chip is switched by controlling a switching state of the power supply controller.

According to another embodiment of the present disclosure, the power supply and payment module 503 may be further configured to:
switch on the power supply controller to power the payment chip by electricity generated in an antenna coil of the payment chip through a near field communication alternating magnetic field of the payee device, when the battery power is insufficient to support the payment of digital currency; and
the power supply and payment module 503 may be further configured to:
   switch off the power supply controller such that the battery power is supplied to the payment chip for the payment of digital currency, when the battery power is sufficient to support the payment of digital currency.

According to another embodiment of the present disclosure, the payment chip includes a secure element and a near field communication unit, the secure element is configured to perform safe payment, and the near field communication unit is configured to establish the communication connection with the payee device.

According to the technical solution of the embodiment of the present disclosure, the communication connection is established with the payee device through near field communication; the battery power of the device is acquired, when the payment chip enters the payment state based on the established communication connection; and the payment chip is powered for the payment of digital currency by electricity generated in the antenna coil of the payment chip through a near field communication alternating magnetic field of the payee device, when the battery power is insufficient to support the payment of digital currency. Thereby, the payment of digital currency can be completed by supplying the power using electricity generated in the antenna coil of the payment chip through a near field communication alternating magnetic field of the payee device, when the battery power of the mobile terminal is insufficient to support the payment of digital currency. In addition, the power supply controller is installed on the payment chip to control the power supply mode for the payment chip, so that switching of the power supply mode is more flexible and convenient. When the battery power of the device is sufficient to support the payment of digital currency, the device is powered by the battery. When the battery power is insufficient to support the payment of digital currency, the power is supplied using electricity generated in the antenna coil of the payment chip through the near field communication alternating magnetic field of the payee device. In this way, completion of the payment is ensured and strong support for expansion of application scenarios of the digital currency is provided.

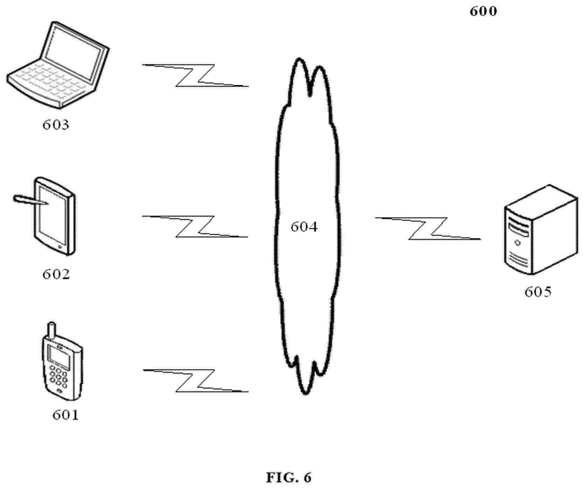

FIG. 6 shows an exemplary system architecture 600 in which a method for payment of digital currency or a device for payment of digital currency according to embodiments of the present disclosure may be applied.

As shown in FIG. 6, the system architecture 600 may include terminal devices 601, 602, 603, a network 604, and a server 605. The network 604 is a medium configured to provide communication links among the terminal devices 601, 602, 603, and the server 605. The network 604 may include various connection types, such as wired communication links, wireless communication links, fiber optic cables, or the like.

The terminal devices 601, 602, and 603 may be used by the user to interact with the server 605 through the network 604, to receive or transmit a message, and the like. The terminal devices 601, 602, and 603 may have various communication client applications installed thereon, such as a digital currency application, a commercial banking application, and a digital currency wallet application, and so on (as examples only).

The terminal devices 601, 602, and 603 may be various electronic devices that have a display screen and support web browsing, including but not limited to smart phones, tablet computers, laptop computers, desktop computers, or the like.

The server 605 may provide various services, for example, serving as a back-end management server (as an example only) that supports a payment request transmitted by a user through the terminal devices 601, 602, and 603. The back-end management server may perform a process on the data such as the received payment request, such as establish a communication connection with a payee device through near field communication; acquire a battery power of a device, when a payment chip enters a payment state based on the established communication connection; and power the payment chip for the payment of digital currency by electricity generated in an antenna coil of the payment chip through a near field communication alternating magnetic field of the payee device, in a case where the battery power is insufficient to support the payment of digital currency; and so on. The server may feedback the process result (such as a result of the payment of digital currency, as an example only) to the terminal device.

It should be noted that the method for payment of digital currency provided by the embodiment of the present disclosure is generally executed by the server 605. Correspondingly, the device for payment of digital currency is generally disposed in the server 605.

It should be understood that the numbers of terminal devices, networks and servers shown in FIG. 6 are illustrative only. Depending on implementation needs, there may be any number of the terminal devices, networks, and servers.

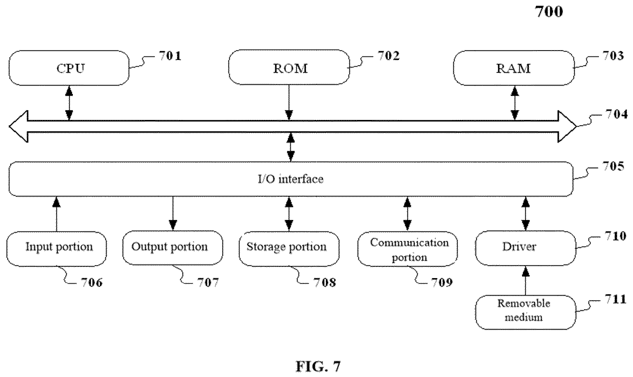

Reference is made to FIG. 7, which shows a schematic structural diagram of a computer system 700 of a terminal device or server suitable for implementing an embodiment of the present disclosure. The terminal device or server shown in FIG. 7 is only an example, and should not be a limitation to a function or usage scope of the embodiments of the present disclosure.

As shown in FIG. 7, the computing system 700 includes a central processing unit (CPU) 701, which may execute various appropriate actions and processes according to a program stored in a read-only memory (ROM) 702 or a program loaded from a storage portion 708 to a random-access memory (RAM) 703. The RAM 703 also has various programs and data for operation of the system 700 stored thereon. The CPU 701, the ROM 702 and the RAM 703 are connected to each other via a bus 704. An input/output (I/O) interface 705 is also connected to the bus 704.

The following components are connected to the I/O interface 705: an input portion 706 (including a keyboard, a mouse, and the like), an output portion 707 (including a cathode ray tube (CRT), a liquid crystal display (LCD), a speaker, and the like), a storage portion 708 (including a hard disk, and the like), and a communication portion 709 (including a network interface card, such as a LAN card, a modem, and the like). The communication portion 709 performs communication processing via a network, such as the Internet. A driver 710 may be connected to the I/O interface 705 as needed. A removable medium 711, such as a magnetic disk, an optical disk, a magnetic optical disk, a semiconductor memory, etc., is installed on the driver 710 as required, so that a computer program read therefrom is installed on the storage portion 708 as required.

Particularly, according to an embodiment of the present disclosure, the foregoing process described with reference to the flow chart may be implemented as a computer software program. For example, according to an embodiment of the present disclosure, a computer program product including a computer program carried on a computer-readable medium is provided. The computer program includes program codes for performing the method shown in the flow chart. In such an embodiment, the computer program may be downloaded and installed from a network via the communication portion 709, and/or may be installed from the removable medium 711. When the computer program is executed by the central processing unit (CPU) 701, the functions defined in the system of the present disclosure are executed.

It should be noted that the computer-readable medium shown in the present disclosure may be a computer-readable signal medium or a computer-readable storage medium, or any combination thereof. The computer-readable storage medium may include, but is not limited to, a system, an apparatus, or a device in an electronic, magnetic, optical, electromagnetic, infrared, or semi-conductive form, or any combination thereof. More specific examples of the computer-readable storage medium may include, but are not limited to, an electrical connection with one or more wires, a portable computer disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device or any suitable combination thereof. In the present disclosure, the computer-readable storage medium may be any tangible medium including or storing a program, and the program may be used by or in combination with an instruction execution system, apparatus, or device. In the present disclosure, a computer-readable signal medium may include a data signal propagated in baseband or as part of a carrier wave. The data signal carries computer-readable program codes. The propagated data signal may be in various forms, including but not limited to an electromagnetic signal, an optical signal or any proper combination thereof. Alternatively, the computer-readable signal medium may be any computer-readable medium other than the computer-readable storage medium. The computer-readable medium may send, propagate or transmit a program to be used by or in combination with an instruction execution system, apparatus or device. The program codes included in the computer-readable medium may be transmitted by using any suitable medium, including but not limited to, a wireless medium, a wire, an optical cable, radio frequency (RF) or the like, or any other suitable combination thereof.

Flow charts and block diagrams in the drawings illustrate architecture, functions and operations that can be implemented by the system, method and computer program product according to the embodiments of the present disclosure. Each block in the flow charts or the block diagrams may represent a module, a program segment, or a portion of codes. The module, the program segment, or the portion of codes includes one or more executable instructions for implementing a specified logical function. It should be noted that, in some alternative implementations, the functions marked in blocks may be performed in an order different from the order shown in the drawings. For example, two blocks shown in succession may actually be executed in parallel, or sometimes may be executed in a reverse order, which depends on functions involved. It should be noted that each block in the block diagrams and/or the flow charts and a combination of blocks in the block diagrams and/or the flow charts may be implemented by using a dedicated hardware-based system for performing a specified function or operation, or may be implemented by using a combination of dedicated hardware and a computer instruction.

The units or modules mentioned in the description of the embodiments of the present disclosure may be implemented by means of software, or may be implemented by means of hardware. The described units or modules can also be provided in a processor. For example, it can be described as follows: a processor includes a connection establishment module, a power acquisition module and a power supply and payment module. Names of these units or modules do not constitute a limitation on the units or modules under a certain circumstance. For example, the connection establishment module may be described as "a module configured to establish a communication connection with a payee device through near field communication".

In another aspect, a computer-readable medium is also provided in the present disclosure. The computer-readable medium may be included in the device described in the foregoing embodiments, or may be standalone, rather than being assembled in the electronic device. The computer-readable medium carries one or more programs. The one or more programs, when executed by a device, cause the device to: establish a communication connection with a payee device through near field communication; acquire a battery power of a device, when a payment chip enters a payment state based on the established communication connection; and power the payment chip for the payment of digital currency by electricity generated in an antenna coil of the payment chip through a near field communication alternating magnetic field of the payee device, when the battery power is insufficient to support the payment of digital currency.

According to the technical solution of the embodiment of the present disclosure, the communication connection is established with the payee device through near field communication; the battery power of the device is acquired, when the payment chip enters the payment state based on the established communication connection; and the payment chip is powered for the payment of digital currency by electricity generated in the antenna coil of the payment chip through a near field communication alternating magnetic field of the payee device, when the battery power is insufficient to support the payment of digital currency. Thereby, the payment of digital currency can be completed by supplying the power using electricity generated in the antenna coil of the payment chip through a near field communication alternating magnetic field of the payee device, when the battery power of the mobile terminal is insufficient to support the payment of digital currency. In addition, a power supply controller is installed on the payment chip to control the power supply mode for the payment chip, so that switching of the power supply mode is more flexible and convenient. When the battery power of the device is sufficient to support the payment of digital currency, the payment of digital currency is made by supplying the battery power. When battery power is insufficient to support the payment of digital currency, the power is supplied by using electricity generated in the antenna coil of the payment chip through a near field communication alternating magnetic field of the payee device. In this way, completion of the payment is ensured and strong support for expansion of application scenarios of the digital currency is provided.

The above specific embodiments are not intended to limit the protection scope of the present disclosure. It should be understood by those skilled in the art that various modifications, combinations, sub combinations and alternations may be made depending on a design requirement and other factors. Any modification, equivalent substitution and improvement made within the spirit and principle of the present disclosure should be included in the protection scope of the present disclosure.

### Industrial applicability

The solutions provided by the embodiments of the present disclosure may be applied to the field of digital currency. According to the embodiments of the present disclosure, a communication connection is established with a payee device through near field communication; a battery power of the device is acquired, when a payment chip enters a payment state based on the established communication connection; and the payment chip is powered for the payment of digital currency using electricity generated in the antenna coil of the payment chip through a near field communication alternating magnetic field of the payee device, when the battery power is insufficient to support the payment of digital currency. In this way, a following technical effect is realized: the payment of digital currency is completed by supplying the power by using electricity generated in the antenna coil of the payment chip through a near field communication alternating magnetic field of the payee device, when the battery power of the mobile terminal is insufficient to support the payment of digital currency, thereby providing strong support for expansion of application scenarios of the digital currency.

## Claims

1. A method for payment of digital currency, comprising:
establishing a communication connection with a payee device through near field communication;
acquiring a battery power of a device, when a payment chip enters a payment state based on the established communication connection; and
powering the payment chip for the payment of digital currency by electricity generated in an antenna coil of the payment chip through a near field communication alternating magnetic field of the payee device, when the battery power is insufficient to support the payment of digital currency.

2. The method according to claim 1, wherein the antenna coil of the payment chip has a power supply controller, and a power supply mode for the payment chip is switched by controlling a switching state of the power supply controller.

3. The method according to claim 2, wherein the powering the payment chip by electricity generated in the antenna coil of the payment chip through the near field communication alternating magnetic field of the payee device, when the battery power is insufficient to support the payment of digital currency, comprises:
switching on the power supply controller to power the payment chip by electricity generated in the antenna coil of the payment chip through the near field communication alternating magnetic field of the payee device, when the battery power is insufficient to support the payment of digital currency; and
wherein the method further comprises: switching off the power supply controller such that the battery power is supplied to the payment chip for the payment of digital currency, when the battery power is sufficient to support the payment of digital currency.

4. The method according to claim 1, wherein the payment chip comprises a secure element and a near field communication unit, the secure element is configured to perform safe payment, and the near field communication unit is configured to establish the communication connection with the payee device.

5. A device for payment of digital currency, comprising:
a connection establishment module configured to establish a communication connection with a payee device through near field communication;
a power acquisition module configured to acquire a battery power of a device, when a payment chip enters a payment state based on the established communication connection; and
a power supply and payment module configured to power the payment chip for the payment of digital currency by electricity generated in an antenna coil of the payment chip through a near field communication alternating magnetic field of the payee device, when the battery power is insufficient to support the payment of digital currency.

6. The device according to claim 5, wherein the antenna coil of the payment chip has a power supply controller, and a power supply mode for the payment chip is switched by controlling a switching state of the power supply controller.

7. The device according to claim 6, wherein the power supply and payment module is further configured to:
switch on the power supply controller to power the payment chip by electricity generated in the antenna coil of the payment chip through the near field communication alternating magnetic field of the payee device, when the battery power is insufficient to support the payment of digital currency; and
wherein the power supply and payment module is further configured to: switch off the power supply controller such that the battery power is supplied to the payment chip for the payment of digital currency, when the battery power is sufficient to support the payment of digital currency.

8. The device according to claim 5, wherein the payment chip comprises a secure element and a near field communication unit, the secure element is configured to perform safe payment, and the near field communication unit is configured to establish the communication connection with the payee device.

9. An electronic device for payment of digital currency, comprising:
one or more processors; and
a storage device, configured to store one or more programs, wherein
the one or more programs, when executed by the one or more processors, cause the one or more processors to implement the method according to any one of claims 1 to 4.

10. A computer-readable medium having a computer program stored thereon, wherein the program, when executed by a processor, performs the method according to any one of claims 1 to 4.
